# EUROPEAN PATENT SPECIFICATION

(11) **EP 1 909 598 B1**
(45) Date of publication and mention of the grant of the patent: **20.10.2010**
(21) Application number: 05754170.8
(22) Date of filing: 27.05.2005
(51) Int. Cl.: A23L 1/221

(54) **VANILLA-FLAVORED COMPOSITIONS AND DELIVERY SYSTEMS THEREFOR**
ZUSAMMENSETZUNGEN MIT VANILLEGESCHMACK UND ABGABESYSTEM DAFÜR
COMPOSITIONS AROMATISEES A LA VANILLE ET LEURS SYSTEMES DE DISTRIBUTION

(43) Date of publication of application: 16.04.2008
(73) Proprietor: Cadbury Adams USA LLC, Parsippany NJ 07054 (US)
(72) Inventor: HARVEY, Joan, E., Morgantown ,Pa 19543 (US); SHAH, Shanaz, Ridgewood,NY 11385 (US); ROBINSON, Mary, Sparta,NJ 07871 (US); HOHE, Karen, Ledgewood,NJ 08752 (US); KABSE, Kishor, Morris Plains ,NJ 07950 (US)
(74) Representative: Wilson Gunn
(86) International application number: PCT/US2005/018843
(87) International publication number: WO 2006/130132

(56) References cited:
- EP-A- 0 299 924
- US-A- 4 029 759
- US-A1- 2002 090 445
- ANONYMOUS: "TUGUMMI" INTERNET ARTICLE, [Online] 21 May 2005 (2005-05-21), XP002355138 Retrieved from the Internet: URL:http://www.superplay.se/forum.php?acti on=read&thread_id=79074> [retrieved on 2005-11-21]
- ANONYMOUS: "Stimorol Fusion: nieuwe generatie kauwgom" INTERNET ARTICLE, [Online] 22 September 2005 (2005-09-22), XP002355080 Retrieved from the Internet: URL:http://www.foodnieuws.nl/actueel/produ ctnieuws/archief/stimorol_fusion_nieuwe_ge neratie_kauwgom/> [retrieved on 2005-11-21]

## Description

### FIELD

The present invention relates to vanilla-flavored compositions and products containing same. More particularly, the present invention relates to oral delivery systems including chewing gum compositions and confectionary compositions which have a characterizing vanilla flavor imparted thereto in combination with breath-freshening components and optionally cooling agents.

### BACKGROUND

Vanilla flavor is used in a wide variety of products. For example, it may be used in comestible products to modify the taste of other dominant flavors. Vanilla flavor is a relatively delicate flavor and may provide a smoothing and/or rounding-out effect on other dominant flavors. However, when used in too high a concentration level, vanilla flavor itself can also deliver harsh or bitter tones. Vanilla flavor may also be used to impact sweetness perception to other dominant flavors. While vanilla flavors can be used alone to impart its flavor characteristic to a product, they do not provide breath-freshening.

Additionally, vanilla flavors may release very quickly from their delivery systems when placed in the mouth. While this is not necessarily problematic when the vanilla flavor is intended to modify another flavor, it can be problematic when the intended characterizing flavor, i.e., the predominant flavor intended, is vanilla *per se.* In such instances, the vanilla taste dissipates very quickly, leaving only secondary flavor impacts, which may be less desirable.

Although vanilla flavor is not typically associated with breath-freshening, mint oils and cooling agents often are used in comestibles to help provide a perception of refreshment. They are known for their breath-freshening effect. However, mint oils and cooling agents also are known for their harshness and bitterness and can cause undesirable burning sensations in the oral cavity. Moreover, mint flavors and their components, including peppermint and spearmint, as well as various cooling agents alone or in combination with mint flavors, are considered very dominant flavors and can easily overwhelm other flavors present in the same composition. This is especially the case with relatively delicate flavors. Thus, while mint-flavored comestibles may provide the desired mint flavor and breath-freshening perceptions, their tendency to totally dominate the flavor perception makes it difficult to provide breath-freshening and the perception of overall refreshment without a dominant mint flavor.

US 2002/0090445 discloses a flavoring system for a liquid pharmaceutical composition comprising two or more flavored ingredients selected from a menthol flavored ingredient, a peppermint flavored ingredient, a vanilla flavored ingredient, a cotton candy flavored ingredient and mixtures thereof.

US 4,029,759 discloses edible compositions, oral compositions and flavor compositions containing a compound imparting a cooling sensation, said compound being a hydroxymethyl or hydroxyethyl derivative of para-menthane.

WO 2006/106130 (state of the art under Article 54(3) EPC) discloses a menthol-containing solids composition comprising a solid menthol component consisting of bodies having 95 wt% or more of menthol, and a solid anticaking agent.

There is a need, wherefore, for vanilla-flavored comestibles, in particular, vanilla-flavored chewing gum compositions and confectionaries, which have vanilla flavor as their characterizing flavor, and which include a breath-freshening impact due to the inclusion of mint flavour such as certain mint oils and optionally cooling agents.

### SUMMARY

The present invention provides a composition which includes: at least one characterizing vanilla flavor; and at least one contributory mint flavor, wherein the vanilla flavor components are present in amounts of 14% to 40% by weight of said composition, and wherein said mint flavor components are present in amounts of 42% to 63% by weight of said composition.

Some embodiments provide a composition including: at least two vanilla flavor components and at least one mint oil; wherein the vanilla flavor components are present in amounts sufficient to provide the perception of vanilla as the characterizing flavor; and the mint oil is present in amounts sufficient to provide the perception of mint as a contributory flavor.

In some embodiments, there is provided a composition including: at least two vanillin-containing components; and at least one mint oil.

In some embodiments, there is provided a composition including: a vanilla flavor composition containing vanilla flavor and vanillin or its derivatives; and a mint oil composition containing a sweet mint oil.

Some embodiments provide a composition which includes: a vanilla flavor composition including vanilla flavor and vanillin or its derivatives; and a mint composition including a mint oil selected from sweet mint oil; cool mint oil; and combinations thereof.

In accordance with some embodiments, there is provided a composition which includes: a particulate composition containing vanillin and menthol; and a liquid composition containing vanilla flavor and mint oil.

Some embodiments provide a composition which includes: an initial-impact flavor, component including vanillin or its derivatives and menthol; and a long-lasting flavor component including vanilla flavor and mint oil.

In some embodiments, there is provided a composition including: a predominant amount of a mint oil composition; and a vanilla flavor composition; wherein the composition has a characterizing flavor and a contributor flavor, the characterizing flavor being vanilla flavor and the contributory flavor being mint flavor.

Some embodiments provide a composition which includes; a characterizing flavor including vanilla flavor, and a breath-freshemng composition including a mint oil and optionally a sensate component

In accordance with some embodiments, there is provided a composition which includes: a flavor oil composition including vanilla flavor oil and sweet mint oil, wherein the flavor oil composition is substantially soluble in gum base polymers; and a particulate composition containing vanillin or its derivatives and menthol, wherein the particulate composition is less soluble in gum base than said flavor oil composition.

Some embodiments provide a composition containing: a vanilla flavor composition having at least one of the following properties: a molecular weight of 150-200; and a specific gravity of 099-1.0; and a mint flavor composition having at least one of the following properties: a molecular weight of 150-260; a specific gravity of 0.88-0.91; a flash point of above 54.4°C (30°F); and a head fraction content of less than 13%.

In some embodiments, there is provided a composition including: vanillin or its derivatives; menthol; a vanilla flavor oil; and at least one mint flavor which includes a sweet mint oil and a cool mint oil The cool mint oil is selected from crystal white mint oil; a blend of a sweet mint oil and crystal white mint oil; a blend of a sweet mint oil and one or more cooling agents; a blend of a sweet mint oil, crystal white mint oil and one or more cooling agents; and combinations thereof.

The invention further provides a comestible which includes: an oral delivery system; and a composition as defined in claim 1, wherein the composition is a vanilla flavored.

The invention yet further provides a substance as defined in claim 8.

Some embodiments provide a chewing gum composition including: a gum base; and a vanila-flavored composition which includes at least one characterizing vanilla flavor and at least one contributory mint flavor.

In some embodiments, there is provided a chewing gum product including: a gum base; a first vanilla-flavored composition which includes at least one characterizing vanilla flavor and at least one contributory mint flavor, and a coating composition including a second vanilla-flavored composition which contains at least one characterizing vanilla flavor and at least one contributory mint flavor.

In accordance with some embodiments, metre is provided an oral delivery system including: a carrier composition which includes components selected from water soluble components, water-insoluble components and combinations thereof; a flavor composition containing at least one characterizing vanilla flavor and at least one contributory mint flavor.

In some embodiments there is provided a composition containing: a vanilla flavor composition which provides a smooth perception; and a mint flavor composition which provides a refreshment perception.

Some embodiments provide a chewing gum composition which includes: a gum base; a creamy flavor composition including at least one characterizing vanilla flavor; and a breath-freshening composition including at least one contributory mint flavor.

Some embodiments provide a pellet gum including: a hard coating containing a polyol and a first vanilla-flavored composition, the first vanflla-flavored composition including at least one characterizing vanilla flavor and at least one contributory mint flavor; and a gum core composition including a gum base and a second vanilla-flavored composition, the second vanilla-flavored composition containing at least one characterizing vanilla flavor and at least one contributory mint flavor.

### DETAILED DESCRIPTION

As used herein the transitional term "comprising," (also "comprises," etc.) which is synonymous with "including," "containing," or "characterized by," is inclusive or openended and does not exclude additional, unrecited elements or method steps, regardless of its use in the preamble or the body of a claim.

As used herein, the terms "bubble gum" and "chewing gum" are used interchangeably and are both meant to include any gum compositions.

As described in detail herein, some embodiments provide vanilla-flavored compositions that impart a predominant perception of vanilla flavor and also provide breath-freshening due to the inclusion of mint flavor components. Some embodiments also provide comestibles, such as chewing gums and the like, which contain the vanilla-flavored compositions.

### Vanilla-Flavored Compositions

Embodiments described herein provide compositions that are vanilla-flavored and also contain mint flavor components which thereby provide a refreshment perception upon consumption by an individual. In some embodiments, the compositions may include at least one characterizing vanilla flavor and at least one contributory mint flavor.

The term "characterizing flavor" refers to a flavor that is perceived by an individual to be predominant upon consumption by the individual. Meanwhile, the term "contributory flavor" refers to a flavor that imparts a lesser flavor perception than the characterizing flavor to an individual upon consumption by the individual.

The characterizing flavor is a vanilla flavor while the contributory flavor is a mint flavor. Accordingly, the individual perceives a predominant Vanilla flavor upon consumption of the composition. Vanilla flavor is often perceived as imparting a smooth or creamy perception to compositions which it is incorporated. The individual also may perceive refreshment, i.e., breath-freshening, due to the contributory mint flavor. The mint flavor, however, does not overwhelm the predominant perception of vanilla flavor.

Vanilla flavor may be imparted to the compositions by incorporating a variety of different components therein. In some embodiments, a single vanilla flavor component may be used, while in other embodiments, a number of different components may be combined to create the vanilla flavor. In different embodiments, different combinations of well-known vanilla flavors may be employed. Suitable vanilla flavor components include, but ate not limited to: vanillin; ethyl vanillin; furaneol; delta decalactone; delta dodecalactone; methylcyclopentenolone ("MCP") hydrate; maple furanone; ethyl maltol; diacetyl; furfuraldehyde; butyric acid; ethyl butyrate; ethyl propionate; heliotropine; butyl butyryl lactate; benzaldehyde; lemon oil; benzodihydropyrone; anisic aldehyde; menthyl thiobutyrate in alcohol; ethanol; medium chain tryglycerides; and combinations thereof.

Vanillin provides a strong vanilla flavor and is typically a main component present in vanilla flavoring. It may be derived naturally from vanilla beans or prepared synthetically. Vanillin is 4-hydzoxy-3-methoxybenzaldehyde, as represented by:

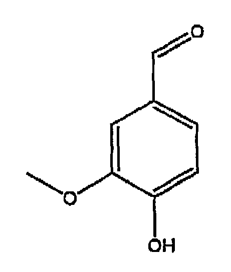

Ethyl vanillin, a derivative of vanillin, also provides a strong vanilla flavor. Ethyl vanillin is 3-ethoxy-4-hydroxybenzaldehyde, as represented by:

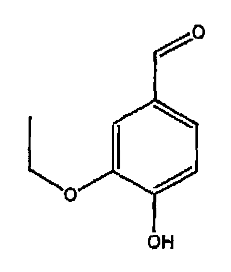

In some embodiments, vanillin may be used alone or in combination with vanillin derivatives. Vanillin and its derivatives, e.g., ethyl vanillin, typically provide a stronger vanilla flavor impact than other vanilla flavor components. As such, in some embodiments vanillin or a derivative thereof may be used in combination with other vanilla flavor components. In some embodiments, it may be desirable to incorporate vanillin or its derivatives in a particulate form such that it releases quickly upon consumption and thereby provides an initial vanilla flavor impact. Other vanilla flavor components may be incorporated in a liquid form, which releases slower from the composition and thereby provides a long-lasting vanilla flavor.

The compositions disclosed herein also include a contributory mint flavor. As mentioned above, the contributory mint flavor may provide breath-freshening but without overwhelming the perception of vanilla flavor. A contributory mint flavor may be achieved by incorporating a variety of different mint oils. Mint oils include some amount of naturally occurring menthol. Any conventional mint flavors known to those skilled in the art may be used. In some embodiments, the mint oil may include a sweet mint oil, a cool mint oil or both.

Sweet mint oils provide a sweet mint taste to the compositions of the present invention. Suitable sweet mint oils may include one or more of the following: *mentha piperita* mint oil; *mentha arvensis* mint oil; *mentha spicata* mint oil; *mentha cardiaca* mint oil; rose mitcham mint oil; corn mint oil; Japanese peppermint oil; Chinese peppermint oil; and combinations thereof.

In accordance therewith, in some embodiments, the sweet mint oil may be obtained from one of the following mint plants: *mentha piperita* (peppermint); *mentha arvensis* (peppermint); *mentha spicata* (spearmint); and *mentha cardiaca* (spearmint). In some embodiments, the head fractions, i.e., less desirable fractions, of the mint oil derived from these plants may be removed to obtain a more pure version of the mint oil. Typically, the head fractions are removed by distillation. Such head fractions may impart harsh or bitter notes to the mint oil, which are undesirable in some embodiments of the present invention. Accordingly, in some embodiments, the sweet mint oil may have a head fraction content of less than 13%, more specifically less than 11%, and even more specifically less than 9%.

Mint flavors for use in the compositions disclosed herein also may include cool mint oils. Cool mint oils may provide a cool, or refreshing, mint taste to the compositions. Suitable cool mint oils include, but are not limited to: crystal white mint oil; a blend of a sweet mint oil, as described above, and crystal white mint oil; a blend of a sweet mint oil, as described above, and one or more cooling agents; or a blend of a sweet mint oil, as described above, crystal white mint oil and one or more cooling agents. Any combinations of these cool mint oils also may be employed.

Crystal white mint oil provides a cooling perception upon consumption. Some embodiments accordingly include crystal white mint oil alone. Cooling agents similarly are known to provide a physiological cooling effect when consumed. In combination with a sweet mint oil, therefore, crystal while mint oil and/or cooling agents may provide a higher degree of cooling and greater refreshment upon consumption than sweet mint oil alone.

In accordance with the present invention, a variety of well-known cooling agents may be employed. For example, among the useful cooling agents are included menthol, xylitol, erythritol, menthane, menthone, ketals, menthone ketals, menthone glycerol ketals, substituted p-menthanes, acyclic carboxamides, substituted cyclohexanamides, substituted cyclohaxane carboxamides, substituted ureas and sulfonamides, substituted menthanols, hydroxymethyl and hydroxymethyl derivatives of p-menthane, 2-mercapto-cyclo-decanone, 2-isoprpanyl-5-methylcyclohexanol, hydroxycarboxylic acids with 2-6 carbon atoms, cyclohexanamides, menthyl acetate, menthyl lactate, methyl salicylate, N,2,3-trimethyl-2-isopropyl butanamide (WS-23), N-ethyl-p-menthane-3-carboxamide (WS-3), menthyl succinate, 3,1-menthoxypropane 1,2-diol, glutarate esters, among others, and combinations thereof. These and other suitable cooling agents are further described in the following U.S. patents, all of which are incorporated in their entirety by reference hereto: U.S. 4,230,688 and 4,032,661 to Rowsell et al.; 4,459,425 to Amano et al.; 4,136,163 to Watson et al.; and 5,266,592 to Grub et al.

As mentioned above, menthol is a naturally occurring component in mint oils. Accordingly, menthol maybe incorporated into the vanilla-flavored compositions as a separate cooling agent or as a naturally occurring component in one of the mint oils. In some embodiments, menthol may be included in the composition both as part of a mint oil, as well as a separate cooling agent

Similar to the high flavor impact of vanillin and its derivatives, menthol, menthone, and the like typically provide a stronger mint flavors, or cooling, impact than some of the other mint flavor component, As such, in some embodiments it may be desirable to incorporate menthol or the like in a particular form such that it releases quickly upon consumption and thereby provides an initial cool mint flavor impact. Other mint flavor components, such as, but not limited to, the sweet mint oils or cool mint oils described above, may be incorporated in a liquid form. The liquid form may release slower from the composition and thereby provide a long-lasting mint flavor upon consumption. Such embodiments whereby may provide long-lasting refreshment.

In accordance therewith, some embodiments may include a particulate composition, which contains vanillin or a derivative thereof and menthol, and a liquid compositions, which includes one or more vanilla flavors and mint oils, as described above, The particulate composition may provide an initial-impact flavor, while the liquid composition may provide a long-lasting flavor. The particulate composition may be in a crystalline, powdered or encapsulated form. Additionally, in, some embodiments, particularly those intended for use in chewing gum compositions, the liquid composition may be substantially soluble in gum base, whereas the particulate composition is less soluble therein. As such, the particulate composition will release initially upon chew, while the liquid composition will release more slowly from the gum base throughout the chew time.

In accordance with the present invention, the vanilla flavor components, also referred to as the vanilla, or creamy, flavor composition, are be present in amounts sufficient to provide a characterizing vanilla flavor. In this regard, the vanilla flavor components are present in amounts of

14% to 40% by weight, and preferably 15% to 25% by weight. The vanilla flavor components may have a molecular weight range of 150-200 and a specific gravity of 0.99-1.0.

The mint flavor components, also referred to as the mint flavor, or breath-freshening, composition, are be present in amounts that impart a contributory flavor to the composition. As such, the mint flavor components are be present in amounts of 42% to 63% by weight, and preferably 45% to 55% by weight. The mint flavor components are present in higher amounts by weight than the vanilla flavor components but still remain a contributory flavor.

As mentioned above, the mint flavor components may have a head fraction content of less than about 13%. In some embodiments, the head fraction content may be less than about 11%, and even more specifically less than about 9%. Additionally, the mint flavor components may have a molecular weight range of 150-260, a specific gravity of 0.88-0.91 and a flash point i.e., temperature at which it ignites, of above 54.4°C (130°F). In some embodiments, the flash point may be 60.6°C (141°F) or higher. For example, rose mitcham, some sweet mint oils, some cool mint oils and crystal white have flash points of 60.6°C (141°F) or higher.

Some embodiments are directed to vanilla-Savored compositions, which include a characterizing vanilla flavor, as described above, in combination with a breath-freshening composition. The breath-freshening composition may include a mint oil, as described above, and a sensate. The sensate may be a cooling agent, as described above, a warming agent, or a tingling agent or any combination thereof

Wanning agents may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful warming agents include those having at least one allyl vinyl component, which may bind to oral receptors. Examples of suitable warming agents include, but are not limited to: vanillyl alcohol n-butylother (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerine; chloroform; eugenol; cinnamon oil; cinnamic aldehyde; phosphate derivatives thereof; and combinations thereof.

Tingling agents may be employed in the oral compositions to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; black pepper extract (piper nigrum), including the active ingredients chavicine and piperine; Echinacea extract; Northern Prickly Ash extract; and red pepper oleoresin. Tingling agents are described in U.S. Patent No. 6,780,443 to Nakatsu et al., U.S. Patent No. 5,407,665 to McLaughlin et al., U.S. Patent No. 6,159,509 to Johnson et al. and U.S. Patent No. 5,545,424 to Nakatsu et al., each of which is incorporated by reference herein in its entirety.

Additionally, some embodiments that are directed to vanilla-flavored compositions that may include vanillin or a derivative thereof, menthol, a vanilla flavor and at least one mint flavor. The mint flavor may include a sweet mint oil and a cool mint oil, each as described above. In some embodiments, the combination of the sweet and cool mint oils may be provided in a pre-mix.

### Delivery Systems

Some embodiments of the present invention provide delivery systems or delivery vehicles for the vanilla-flavored compositions described above. The delivery systems (also referred to as "comestibles") generally encompass any edible or consumable compositions, such as foods and beverages. More particularly, the comestible may be selected from forms such as, but not limited to, hard candy, soft candy, cotton candy, pressed tablets, chewing gum, film, lozenges, liquid beverages, powdered beverages, and the like. Such comestibles include any of the vanilla-flavored compositions described above, a carrier and optionally additives, such as flavor agents, coloring agents and the like.

As described in detail above, the vanilla-flavored composition generally includes a characterizing vanilla flavor and a contributory mint flavor. The vanilla flavor components may be selected from those described above. In general, the vanilla flavor components are present in amounts of about 0.14% to about 1.6% by weight, and even more specifically about 0.15% to about 1% by weight

The mint flavor components also may be selected from those described above. In general, the mint flavor components are present in amounts of about 0.42% to about 2.52% by weight, and even more specifically about 0.45% to about 2.2% by weight.

The carrier component may be selected from a variety of well-known carriers in the art. Selection of suitable carriers depends upon the type of comestible being prepared.

For example, some embodiments are directed to chewing gum compositions. The carrier in chewing gum compositions may include a gum base and other optional components, such as bulk sweeteners, flavors and the like. The gum base may include any component known in the chewing gum art. Such components may be water soluble, water-insoluble or a combination thereof. For example, the gum base may include elastomers, bulking agents, waxes, elastomer solvents, emulsifiers, plasticizers, fillers and mixtures thereof.

The elastomers (rubbers) employed in the gum base will vary greatly depending upon various factors such as the type of gum base desired, the consistency of gum composition desired and the other components used in the composition to make the final chewing gum product The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, polyvinyl acetate and the like, and mixtures thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from 10% to 60% by weight, desirably from 35% to 40% by weight.

In some embodiments, the gum base may include wax. It softens the polymeric elastomer mixture and improves the elasticity of the gum base. When present, the waxes employed will have a melting point below about 60°C, and preferably between about 45°C and about 55°C. The low melting wax may be a paraffin wax. The wax may be present in the gum base in an amount from 6% to 10%, and preferably from 7% to 9.5%, by weight of the gum base.

In addition to the low melting point waxes, waxes having a higher melting point may be used in the gum base in amounts up to 5%, by weight of the gum base. Such high melting waxes include beeswax, vegetable wax, candelilla wax, carnuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from 2% to 15%, and preferably from 7% to 11%, by weight of the gum base.

The gum base may also include emulsifiers which aid in dispensing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from 2% to 15%, and more specifically, from 7% to 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to 20% by weight of the gum base, and more specifically in amounts from 9% to 17%, by weight of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amounts from 5% to 14%, and more specifically in amounts from 5% to 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. Preferably the amount of filler, when used, will be present in an amount from 15% to 40%, and desirably from 20% to 30%, by weight of the gum base.

A variety of traditional ingredients may be optionally included in the gum base in effective amounts such as flavor agents and coloring agents, antioxidants, preservatives, and the like. For example, titanium dioxide and other dyes suitable for food, drug and cosmetic applications, known as F. D. & C. dyes, may be utilized. An anti-oxidant such as butylated hydroxytolnene (BHT), butylated hydroxyanisole (BHA), propyl gallate, vitamin E and mixtures thereof, may also be included. Other conventional chewing gum additives known to one having ordinary skill in the chewing gum art may also be used in the gum base.

The chewing gum compositions may include amounts of conventional additives selected from the group consisting of sweetening agents, plasticizers, softeners, emulsifiers, waxes, fillers, bulking agents (carriers, extenders, bulk sweeteners), mineral adjuvants, flavor agents and coloring agents, antioxidants, acidulants, thickeners, medicaments, oral care actives, such as remineralization agents, antimicrobials and tooth whitening agents, as described in assignee's co-pending U.S. Patent Application No. 14/901,511, filed on July 29, 2004 and entitled "Tooth Whitening Compositions and Delivery Systems Therefor," (WO-A-2006/022850) and the like, and mixtures thereof. Some of these additives may serve more than one purpose. For example, in sugarless gum compositions, a sweetener, such as maltitol or other sugar alcohol, may also function as a bulking agent.

Bulk sweeteners include sugars, sugarless bulk sweeteners, or the like, or mixtures thereof. Bulk sweeteners generally are present in amounts of 5% to 99% by weight of the chewing gum composition. Suitable sugar sweeteners generally include monosaccharides, di-saccharides and poly-saccharides such as but not limited to, sucrose (sugar), dextrose, maltose, dextrin, xylose, ribose, glucose, mannose, galactose, fructose (levulose), invert sugar, fructo oligo saccharide syrups, partially hydrolyzed starch, corn syrup solids and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythrytol, hydrogenated starch hydrolysate, stevia and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, N.J., are also useful

In some embodiments, high-intensity sweeteners also may be included as sweetening agents in the chewing gum compositions. Without being limited to particular sweeteners, representative categories and examples include:
(a) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(b) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cylohexen)-alanine, and mixtures thereof;
(c) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(d) protein based sweeteners such as thaumaoccous danielli (Thaumatin I and II); and
(e) the naturally occurring sweetener monatin (2-hydroxy-2-(indol-3-ylmethyl)-4-aminoglutaric acid) and its derivatives.

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, an effective amount of intense sweetener may be utilized to provide the level of sweetness desired, and this amount may vary with the sweetener selected. The intense sweetener may be present in amounts from 0.001 % to 3%, by weight of the chewing gum composition, depending upon the sweetener or combination of sweeteners used. The exact range of amounts for each type of sweetener may be selected by those skilled in the art.

Flavor agents, in addition to the vanilla and mint flavors, also may be included in the chewing gum compositions. Flavor agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This publication is incorporated herein by reference.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavor agent may be employed in either liquid form and/or dried form. When employed in the latter form, suitable drying means such as spray drying the oil may be used. Alternatively, the flavor agent may be absorbed onto water soluble materials, such as cellulose, starch, sugar, maltodextrin, gum arabic and so forth or may be encapsulated. The actual techniques for preparing such dried forms are well-known.

In some embodiments, the flavor agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavor agent employed herein may be a matter of preference subject to such factors as the type of final comestible, such as a chewing gum composition, lozenge or candy composition; the individual flavor; the carrier employed; and the strength of flavor desired. Thus, the amount of flavoring may be varied in order to obtain the result desired in the final product. In chewing gum compositions, the flavor agent is generally present in amounts from 0.02% to 5%, and more specifically from 0.1% to 4%, and even more specifically, from 0.8% to 3%, by weight of the composition.

Coloring agents may be used in amounts effective to produce the desired color. The coloring agents may include pigments which may be incorporated in amounts up to 6%, by weight of the composition. For example, titanium dioxide maybe incorporated in amounts up to 2%, and preferably less than 1%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

Other conventional gum additives known to one having ordinary skill in the chewing gum art also may be used in the chewing gum compositions.

Some embodiments extend to methods of making the chewing gum compositions. The compositions may be prepared using standard techniques and equipment known to those skilled in the art. The apparatus useful in accordance with the embodiments described herein includes mixing and heating apparatus well known in the chewing gum manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al, each of which is incorporated herein by reference in its entirety.

In some embodiments, the chewing gum may have a coating thereon. Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, and other crystallizable polyols; sucrose may also be used. Furthermore the coating may include several opaque layers, such that the chewing gum composition is not visible through, the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat As the coating dries it usually becomes opaque and is usually white, though other colorants may be added. A polyol coating can be further coated with wax. The coating can further include colored flakes or speckles. If the composition include a coating, it is possible that one or more oral care actives can be dispersed throughout the coating. This is especially preferred if one or more oral care actives is incompatible in a single phase composition with another of the actives. Flavors may also be added to yield unique product characteristics.

In some embodiments, the coating also may include a vanilla-flavored composition. The vanilla-flavored composition may be selected from any of those described above. In accordance with the present invention, the vanilla-flavored composition may be present in the gum core, the gum coating or both. For instance, in some embodiments, the chewing gum may include a hard coating containing a polyol, as described above, and a vanilla-flavored composition. The gum core may include a gum base, as described above, and also may include a vanilla-flavored composition, which may be the same or different from the vanilla-flavored composition used in the coating.

Other materials may be added to the coating to achieve desired properties. These materials may include without limitations, cellulosics such as carboxymethyl cellulose, gelatin, xanthan gum, gum arabic and polyvinyl alcohol (PVA).

The coating composition may also include a pre-coating which is added to the individual gum pieces prior to an optional hard coating. The pre-coaing may include an application of polyvinyl alcohol (PVA). This may be applied as a solution of PVA in a solvent, such as ethyl alcohol. When an outer hard coating is desired, the PVA application may be 3% to 4% by weight of the total coating or about 1% of the total weight of the gum piece (including a gum core and hard coating).

The coating composition may be applied by any method known in the art including the method described above. The coating composition may be present in an amount from 2% to 60%, more specifically from 25% to 45% by weight of the total chewing gum piece.

Some other embodiments are directed to comestibles in the form of a lozenge or candy, also commonly referred to as confectioneries. The carrier in confectionery compositions may include bulk sweeteners such as sugars, sugarless bulk sweeteners, or the like, or mixtures thereof, as described above. Bulk sweeteners generally are present in amounts of 0.05% to 99% by weight of the confectionery composition.

A variety of traditional ingredients also may be included in the confectionery compositions in effective amounts such as flavor agents, coloring agents, intense sweeteners, antioxidants, preservative, and the like, as described above.

Other conventional additives known to one having ordinary skill in the art also may be used in the confectionery compositions.

Methods of making confectioneries are not discussed in detail herein as they are well known to one having ordinary skill in the art. For general confectionery reparation processes see U.S. Patent No. 5,698,181 to Luo, which is incorporated herein by reference in its entirety.

Methods of preparing other comestible products, including soft candy, cotton candy, pressed tablets, film, liquid and powdered beverages, and the like also are well known to those having ordinary skill in the art and need not be discussed in detail herein.

## Claims

1. A composition comprising:
at least one characterizing vanilla flavor; and
at least one contributory mint flavor;
wherein said vanilla flavor components are present in amounts of 14% to 40% by weight of said composition, and wherein said mint flavor components are present in amounts of 42% to 63% by weight of said composition.

2. The composition of claim 1, wherein said characterizing vanilla flavor is selected from the group consisting of: vanillin; ethyl vanillin; furaneol; delta decalactone; delta dodecalactone; methylcyclopentenolone hydrate; maple furanone; ethyl maltol; diacetyl; furfuraldehyde; butyric acid; ethyl butyrate; ethyl propionate; heliotropine; butyl butyryl lactate; benzaldehyde; lemon oil; benzodihydropyrone; anisic aldehyde; methyl thiobutyrate in alcohol; ethanol; medium chain tryglycerides; and combinations thereof.

3. The composition of claim 1 comprising:
at least two vanilla flavor components and at least one mint flavor selected from mint oil;
wherein said vanilla flavor components are present in amounts sufficient to provide the perception of vanilla as the characterizing flavor; and
said mint oil is present in amounts sufficient to provide the perception of mint as a contributory flavor.

4. The composition of claim 1 wherein the vanilla flavor comprises:
at least two vanillin-containing components; and wherein the mint flavor comprises at least one mint oil.

5. The composition of claim 1 wherein the mint oil is comprised within a breath freshening composition, and wherein the breath freshening composition also contains:
a sensate component.

6. The composition of claim 5, wherein said sensate component is selected from a cooling agent, a warming agent or a tingling agent, or any combination thereof.

7. The composition of claim 1 wherein the:
vanilla flavor composition has at least one of the following properties:
a molecular weight of 150-200; and a specific gravity of 0.99-1.0; and the mint flavor composition has at least one of the following properties: a molecular weight of 150-260; a specific gravity of 0.88-0.91; a flash point of above 54.4°C (130°F), and a head fraction content of less than 13%.

8. A substance comprising:
an initial-impact flavor component comprising vanillin or its derivatives and menthol;
and a long-lasting flavor component comprising the composition of claim 1, wherein the contributory mint flavor is mint oil.

9. The substance of claim 8 wherein the initial-impact flavor component is:
a particulate composition comprising vanillin and menthol; and wherein the long-lasting flavor component is a liquid composition comprising vanilla flavor and mint oil.

10. The substance of claims 3, 4, and 9 wherein said mint oil is selected from the group consisting of sweet mint oil; cool mint oil; and combinations thereof.

11. The substance of claim 10, wherein said cool mint oil is selected from the group consisting of: crystal white mint oil; a blend of a sweet mint oil and crystal white mint oil; a blend of a sweet mint oil and one or more cooling agents; a blend of a sweet mint oil, crystal white mint oil and one or more cooling agents; and combinations thereof; and said sweet mint oil is selected from the group consisting of: *mentha piperita* mint oil; *mentha arvensis* mint oil; *mentha spicata* mint oil; *mentha cardiaca* mint oil; rose mitcham mint oil; corn mint oil; Japanese peppermint oil; Chinese peppermint oil; and combinations thereof.

12. The substance of claim 11, wherein said cooling agent is selected from the group consisting of: menthol, xylitol, erythritol, menthane, menthone, ketals, menthone ketals, menthone glycerol ketals, substituted p-menthanes, acyclic carboxamides, substituted cyclohexanamides, substituted cyclohaxane carboxamides, substituted ureas and sulfonamides, substituted menthanols, hydroxymethyl and hydroxymethyl derivatives of p-methane, 2-mcrcapto-cyclo-decanone, 2-isopropanyl-5-methylcyclohexanol, hydroxycarboxylic acids with 2-6 carbon atoms, cyclohexanamides, menthyl acetate, menthyl lactate, methyl salicylate, N,2,3-trimethyl-2-isopropyl butanamide, N-ethyl-p-menthane-3- carboxamide, menthyl succinate, 3,1-menthoxypropane 1,2-diol, glutarate esters, and combinations thereof.

13. The substance of claim 9 wherein the liquid composition is a flavor oil composition which comprises vanilla flavor oil and sweet mint oil, wherein said flavor oil composition is substantially soluble in gum base polymers; and wherein said particulate composition is less soluble in gum base than said flavor oil composition.

14. The substance of claims 9 and 13, wherein said particulate composition is in a form selected from the group consisting of: crystalline; powdered; and encapsulated.

15. A comestible comprising:
(a) an oral delivery system; and
(b) a composition as defined in claim 1, wherein the composition is vanilla-flavored.

16. The comestible of claim 15 wherein the comestible is a chewing gum composition and the oral delivery system is a gum base.

17. The comestible of claim 16 additionally comprising:
a coating composition comprising a second vanilla-flavored composition comprising:
(i) at least one characterizing vanilla flavor; and
(ii) at least one contributory mint flavor.

18. The comestible of claim 15 wherein the oral delivery system comprises:
a carrier composition comprising components selected from the group consisting of water soluble components, water-insoluble components and combinations thereof.

19. The comestible of claim 17 wherein the coating is a hard coating additionally comprising a polyol and wherein the gum base and the first vanilla-flavored composition comprise the gum core.

## Patentansprüche

1. Zusammensetzung, umfassend:
mindestens ein kennzeichnendes Vanillearoma und
mindestens ein mitwirkendes Minzaroma;
wobei die Vanillearoma-Komponenten in einer Menge von 14 bis 40 Gew.-% der Zusammensetzung vorhanden sind und wobei die Minzaroma-Komponenten in einer Menge von 42 bis 63 Gew.-% der Zusammensetzung vorhanden sind.

2. Zusammensetzung nach Anspruch 1, wobei das kennzeichnende Vanillearoma ausgewählt ist aus der Gruppe bestehend aus: Vanillin, Ethylvanillin, Furaneol, delta-Decalacton, delta-Dodecalacton, Methylcyclopentenolonhydrat, Ahornfuranon, Ethylmaltol, Diacetyl, Furfural, Buttersäure, Ethylbutyrat, Ethylpropionat, Piperonal, Butylbutyryllactat, Benzaldehyd, Zitronenöl, Benzodihydropyron, Anisaldehyd, Methylthiobutyrat in Alkohol, Ethanol, mittelkettige Triglyceride und Kombinationen davon.

3. Zusammensetzung nach Anspruch 1, umfassend:
mindestens zwei Vanillearoma-Komponenten und mindestens ein Minzaroma, das aus Minzöl ausgewählt ist;
wobei die Vanillearoma-Komponenten in einer ausreichenden Menge vorhanden sind, damit Vanille als kennzeichnender Geschmack wahrgenommen wird, und
wobei das Minzöl in einer ausreichenden Menge vorhanden ist, damit Minze als mitwirkender Geschmack wahrgenommen wird.

4. Zusammensetzung nach Anspruch 1, wobei das Vanillearoma umfasst:
mindestens zwei Vanillin-haltige Komponenten, und wobei das Minzaroma mindestens ein Minzöl umfasst.

5. Zusammensetzung nach Anspruch 1, wobei das Minzöl in einer den Atem erfrischenden Zusammensetzung enthalten ist und wobei die den Atem erfrischende Zusammensetzung zudem enthält:
eine auf die Sinne wirkende Komponente.

6. Zusammensetzung nach Anspruch 5, wobei die auf die Sinne wirkende Komponente aus einem kühlenden Mittel, einem wärmenden Mittel oder einem prickelnden Mittel oder einer Kombination davon gewählt ist.

7. Zusammensetzung nach Anspruch 1, wobei die:
Vanillearoma-Zusammensetzung mindestens eine der folgenden Eigenschaften aufweist:
eine Molekülmasse zwischen 150 und 200 und eine relative Dichte zwischen 0,99 und 1,0 und wobei die Minzaroma-Zusammensetzung mindestens eine der folgenden Eigenschaften aufweist: eine Molekülmasse zwischen 150 und 260, eine relative Dichte zwischen 0,88 und 0,91, einen Flammpunkt von mehr als 54,4°C (130°F) und einen Kopffraktionsanteil von unter 13 %.

8. Substanz, umfassend:
eine zu Beginn wirkende Geschmackskomponente, die Vanillin oder seine Derivate und Menthol umfasst, sowie eine lang wirkende Geschmackskomponente, die die Zusammensetzung nach Anspruch 1 umfasst, wobei das mitwirkende Minzaroma Minzöl ist.

9. Substanz nach Anspruch 8, wobei es sich bei der zu Beginn wirkenden Geschmackskomponente um Folgendes handelt:
eine partikuläre Zusammensetzung, die Vanillin und Menthol umfasst, und wobei die lang wirkende Geschmackskomponente eine flüssige Zusammensetzung ist, die Vanillearoma und Minzöl umfasst.

10. Substanz nach Ansprüchen 3, 4 und 9, wobei das Minzöl aus der Gruppe ausgewählt ist, die aus süßem Minzöl, kühlem Minzöl und Kombinationen davon besteht.

11. Substanz nach Anspruch 10, wobei das kühle Minzöl ausgewählt ist aus der Gruppe bestehend aus: kristallweißem Minzöl, einem Gemisch aus einem süßen Minzöl und kristallweißem Minzöl, einem Gemisch aus einem süßen Minzöl und einem oder mehreren kühlenden Mitteln, einem Gemisch aus einem süßen Minzöl, kristallweißem Minzöl und einem oder mehreren kühlenden Mitteln und Kombinationen davon, und wobei das süße Minzöl ausgewählt ist aus der Gruppe bestehend aus: Minzöl der *mentha piperita,* Minzöl der *mentha arvensis,* Minzöl der *mentha spicata,* Minzöl der *mentha cardiaca,* Rose-Mitcham-Minzöl, Minzöl der Ackerminze, japanischem Pfefferminzöl, chinesischem Pfefferminzöl und Kombinationen davon.

12. Substanz nach Anspruch 11, wobei das kühlende Mittel ausgewählt ist aus der Gruppe bestehend aus: Menthol, Xylitol, Erythritol, Menthan, Menthon, Ketalen, Menthonketalen, Menthonglycerolketalen, substituierten p-Menthanen, azyklischen Carboxamiden, substituierten Cyclohexanamiden, substituierten Cyclohexancarboxamiden, substituierten Harnstoffen und Sulfonamiden, substituierten Menthanolen, Hydroxymethyl und Hydroxymethylderivate von p-Menthan, 2-Mercaptocyclodecanon, 2-Isopropanyl-5-methylcyclohexanol, Hydroxycarbonsäuren mit 2 bis 6 Kohlenstoffatomen, Cyclohexanamiden, Menthylacetat, Menthyllactat, Methylsalicylat, N,2,3-Trimethyl-2-isopropylbutanamid, N-Ethyl-p-menthan-3-carboxamid, Menthylsuccinat, 3,1-Menthoxypropan-1,2-diol, Glutarsäureestern und Kombinationen davon.

13. Substanz nach Anspruch 9, wobei die flüssige Zusammensetzung eine Aromaöl-Zusammensetzung ist, die Vanillearomaöl und süßes Minzöl umfasst, wobei die Aromaöl-Zusammensetzung größtenteils löslich in Kaugummigrundmassepolymeren ist, und wobei sich die partikuläre Zusammensetzung in der Kaugummigrundmasse schlechter löst als die Aromaöl-Zusammensetzung.

14. Substanz nach Anspruch 9 und 13, wobei die partikuläre Zusammensetzung in einer Form vorliegt, die ausgewählt ist aus der Gruppe bestehend aus: kristallin, pulverförmig und eingekapselt.

15. Nahrungsmittel, umfassend:
(a) orales Abgabesystem und
(b) eine Zusammensetzung nach Anspruch 1, wobei die Zusammensetzung nach Vanille schmeckt.

16. Nahrungsmittel nach Anspruch 15, wobei das Nahrungsmittel eine Kaugummi-Zusammensetzung ist und das orale Abgabesystem eine Kaugummigrundmasse ist.

17. Nahrungsmittel nach Anspruch 16, zusätzlich umfassend:
eine Beschichtungszusammensetzung, umfassend eine zweite Zusammensetzung mit Vanillegeschmack, umfassend:
(i) mindestens ein kennzeichnendes Vanillearoma und
(ii) mindestens ein mitwirkendes Minzaroma.

18. Nahrungsmittel nach Anspruch 15, wobei das orale Abgabesystem umfasst:
einen Trägerzusammensetzung, die Komponenten umfasst, die aus der Gruppe ausgewählt sind, die aus wasserlöslichen Komponenten, wasserunlöslichen Komponenten und Kombinationen davon besteht.

19. Nahrungsmittel nach Anspruch 17, wobei die Beschichtung eine harte Beschichtung ist, die zusätzlich ein Polyol umfasst, und wobei die Kaugummigrundmasse und die erste Zusammensetzung mit Vanillegeschmack den Kaugummikern umfassen.

## Revendications

1. Composition comprenant :
au moins un arôme de vanille caractérisant ; et
au moins un arôme de menthe contributif ;
dans laquelle lesdits composants d'arôme de vanille sont présents dans des quantités de 14 % à 40 % en poids de ladite composition, et dans laquelle lesdits composants d'arôme de menthe sont présents dans des quantités de 42 % à 63 % en poids de ladite composition.

2. Composition selon la revendication 1, dans laquelle ledit arôme de vanille caractérisant est choisi dans le groupe constitué par : la vanilline ; l'éthyl vanilline ; le furanéol ; la delta décalactone ; la delta dodécalactone ; l'hydrate de méthylcyclopenténolone ; la furanone d'érable ; l'éthyl maltol ; le diacétyle ; la furfuraldéhyde ; l'acide butyrique ; le butyrate d'éthyle ; le propionate d'éthyle ; l'héliotropine ; le butyryl lactate de butyle ; la benzaldéhyde ; l'huile de citron ; la benzodihydropyrone ; l'aldéhyde anisique ; le thiobutyrate de méthyle dans de l'alcool ; l'éthanol ; les triglycérides à chaîne moyenne ; et leurs combinaisons.

3. Composition selon la revendication 1, comprenant :
au moins deux composants d'arôme de vanille et au moins un arôme de menthe choisi parmi de l'huile de menthe ;
dans laquelle lesdits composants d'arôme de vanille sont présents dans des quantités suffisantes pour assurer la perception de vanille comme arôme caractérisant ; et
ladite huile de menthe est présente dans des quantités suffisantes pour assurer la perception de menthe comme arôme contributif.

4. Composition selon la revendication 1; dans laquelle l'arôme de vanille comprend :
au moins deux composants contenant de la vanilline ; et dans laquelle l'arôme de menthe comprend au moins une huile de menthe.

5. Composition selon la revendication 1, dans laquelle l'huile de menthe est comprise dans une composition de rafraîchisseur, d'haleine, et dans laquelle la composition de rafraîchisseur d'haleine contient également :
un composant organoleptique.

6. Composition selon la revendication 5, dans lequel ledit composant organoleptique est choisi parmi un agent rafraîchissant, un agent réchauffant ou un agent picotant, ou une de leurs combinaisons.

7. Composition selon la revendication 1, dans laquelle :
la composition d'arôme vanille présente au moins l'une des propriétés suivantes :
une masse moléculaire de 150 à 200 ; et une densité de 0,99 à 1,0 ; et la composition d'arôme de menthe présente au moins l'une des propriétés suivantes : une masse moléculaire de 150 à 260 ; et une densité de 0,88 à 0,91 ; un point éclair supérieur à 54,4 °C (130 °F) et une teneur en fraction de tête inférieure à 13 %.

8. Substance comprenant :
un composant d'arôme d'impact initial comprenant de la vanilline ou ses dérivés et du menthol ; et un composant d'arôme durable comprenant la composition selon la revendication 1, dans laquelle l'arôme de menthe contributif est de l'huile de menthe.

9. Substance selon la revendication 8, dans laquelle le composant d'arôme d'impact initial est :
une composition particulaire comprenant de la vanilline et du menthol ; et dans laquelle le composant d'arôme durable est une composition liquide comprenant un arôme de vanille et de l'huile de menthe.

10. Substance selon les revendications 3, 4 et 9, dans laquelle ladite huile de menthe est choisie dans le groupe constitué par l'huile de menthe douce ; l'huile de menthe fraîche ; et leurs combinaisons.

11. Substance selon la revendication 10, dans laquelle ladite huile de menthe fraîche est choisie dans le groupe constitué par : l'huile de menthe cristalline blanche ; un mélange d'huile de menthe douce et d'huile de menthe cristalline blanche ; un mélange d'huile de menthe douce et d'un ou plusieurs agents rafraîchissants ; un mélange d'huile de menthe douce, d'huile de menthe cristalline blanche et d'un ou plusieurs agents rafraîchissants ; et leurs combinaisons ; et ladite huile de menthe douce est choisie dans le groupe constitué par : l'huile de menthe *Mentha piperita* ; l'huile de menthe *Mentha arvensis ;* l'huile de menthe *Mentha spicata ;* l'huile de menthe *Mentha cardiaca* ; l'huile de menthe Mitcham rose; l'huile de menthe des champs ; l'huile de menthe poivrée japonaise ; l'huile de menthe poivrée chinoise ; et leurs combinaisons.

12. Substance selon la revendication 11, dans laquelle ledit agent rafraîchissant est choisi dans le groupe constitué par : le menthol, le xylitol, l'érythritol, le menthane, la menthone, les cétals, les cétals de menthone, les cétals de glycérol de menthone, les p-menthanes substitués, les carboxamides acycliques, les cyclohexanamides substitués, les carboxamides de cyclohexane substitués, les urées et sulfonamides substitués, les menthanols substitués, l'hydroxylméthyle de p-menthane et ses dérivés d'hydroxylméthyle, la 2-mercapto-cyclo-décanone, le 2-isopropanyl-5-méthylcyclohexanol, les acides hydroxycarboxyliques à 2 à 6 atomes de carbone, les cyclohexanamides, l'acétate de menthyle, le lactate de menthyle, le salicylate de méthyle, la N,2,3-triméthyl-2-isopropylbutanamide, la N-éthyl-p-menthane-3-carboxamide, le succinate de menthyle, le 3,1-menthoxypropane 1,2-diol, les esters de glutarate, et leurs combinaisons.

13. Substance selon la revendication 9, dans laquelle la composition liquide est une composition d'huile aromatique qui comprend de l'huile d'arôme de vanille et de l'huile de menthe douce, dans laquelle ladite composition d'huile aromatique est sensiblement soluble dans des polymère de gomme de base ; et dans laquelle ladite composition particulaire est moins soluble dans la gomme de base que ladite composition d'huile aromatique.

14. Substance selon les revendications 9 et 13, dans laquelle ladite composition particulaire se présente sous une forme choisie dans le groupe constitué par : cristalline ; en poudre ; et encapsulée.

15. Produit comestible comprenant :
(a) un système d'administration orale ; et
(b) une composition telle que définie dans la revendication 1, la composition étant aromatisée à la vanille.

16. Produit comestible selon la revendication 15, dans lequel le produit comestible est une composition de chewing-gum et le système d'administration orale est une gomme de base.

17. Produit comestible selon la revendication 16, comprenant additionnellement :
une composition d'enrobage comprenant une seconde composition aromatisée à la vanille comprenant :
(i) au moins un arôme de vanille caractérisant ; et
(ii) au moins un arôme de menthe contributif.

18. Produit comestible selon la revendication 15, dans lequel le système d'administration orale comprend :
une composition de support comprenant des composants choisis dans le groupe constitué par des composants solubles dans l'eau, des composants insolubles dans l'eau et leurs combinaisons.

19. Produit comestible selon la revendication 17, dans lequel l'enrobage est un enrobage dur comprenant additionnellement un polyol et dans lequel la gomme de base et la première composition aromatisée à la vanille constituent le noyau de la gomme.
